Europäisches Patentamt

European Patent Office

Office européen des brevets

(19)

(11) Publication number: **0 072 212**
**B1**

(12) **EUROPEAN PATENT SPECIFICATION**

(45) Date of publication of patent specification: **29.10.86**

(21) Application number: **82304143.9**

(22) Date of filing: **05.08.82**

(51) Int. Cl.⁴: **A 23 D 5/00,** A 23 D 5/02, A 23 G 3/00

(54) **Edible fat.**

(30) Priority: **10.08.81 GB 8124409**

(43) Date of publication of application:
**16.02.83 Bulletin 83/07**

(45) Publication of the grant of the patent:
**29.10.86 Bulletin 86/44**

(84) Designated Contracting States:
**AT BE CH DE FR GB IT LI NL SE**

(56) References cited:
**DE-A-1 492 951**
**FR-A-1 230 721**
**US-A-3 298 837**
**US-A-4 160 850**

(73) Proprietor: **UNILEVER PLC**
**Unilever House Blackfriars P.O. Box 68**
**London EC4P 4BQ (GB)**
㊺ **GB**

(73) Proprietor: **UNILEVER NV**
**Burgemeester s'Jacobplein 1 P.O. Box 760**
**NL-3000 DK Rotterdam (NL)**
㊺ **BE CH DE FR IT LI NL SE AT**

(72) Inventor: **Skiba, Karl Josef**
**Treppkesweg 29**
**D-4190 Kleve (DE)**
Inventor: **Weese, Udo Albert**
**Arnheimer Strasse 4**
**D-4240 Emmerich (DE)**

(74) Representative: **Litherland, Donald et al**
**UNILEVER PLC Patents Division P.O. Box 68**
**Unilever House**
**London EC4P 4BQ (GB)**

Courier Press, Leamington Spa, England.

EP 0 072 212 B1

# 0 072 212

## Description

This invention relates to confectionery fats, especially in fillings in and for bon-bons and biscuits.

According to the present invention a confectionery fat comprising a blend of vegetable fats at least one-third of which consists of fractionated palm oil, the said fat having a slip melting point of at most 40°C and dilatations at 20°C of at least 300 and at 30°C of at most 750, is characterised by the presence in the blend of hardstock comprising at most 10% of a hydrogenated vegetable fat having a slip melting point of at least 40°C for improving aeration.

The confectionery fat of the present invention is preferably prepared by working the blend from a temperature at which it is completely liquid to a temperature from 5 to 20°C, in a "Votator" or other scraped-surface heat exchanger, to a condition in which it is plastic, at least 1% of the hardstock fat being present.

The fats of the invention have good aeration qualities. Aeration is commonly applied to confectionery filling fats to improve the mouth-feel and response of confectionery .

In DE—A—1492721 a fat composition is disclosed for culinary use, comprising a blend of palm oil, soya bean oil and hardened palm oil together with animal lard, which is worked in a scraped-surface heat exchanger, to provide a plastified fat which can be readily worked in recipes for cooking.

French patent 1230721 discloses a fat blend suitable for replacing cocoabutter and compatible therewith, consisting of a mid-fraction of palm oil blended with an upper-melting fraction of shea fat. These blends are free from both animal fat and hydrogenated fat and exhibit distinct melting performance.

Preferably the fractionated palm oil component of the present invention consists substantially of a mid-fraction of palm oil having an Iodine Value from 33 to 36, a dilatation at 20°C of at least 1400 and at 35°C of at most 150. The fractionated palm oil may constitute part of a cocoabutter substitute blend, with vegetable butters and their fractionated products, for example shea, sal, aceituno, kokum and illipe fats. Alternatively the palm mid-fraction may be blended with the liquid or oleine fraction obtained by fractionating palm oil by removing an upper-melting fraction therefrom at a temperature preferably from 0 to 20°C, the liquid fraction preferably having an Iodine Value 50 to 70 and preferably fractionated from e.g. hexane, acetone or 2-nitropropane. More particularly the liquid fraction is preferably separated from the solid fraction recovered as palm mid-fraction in a second, successive fractionation of palm oil and is blended in an amount from 40 to 60% and more particularly, in approximately equal parts by weight of the blend, with palm mid-fraction.

The hardstock fat may be provided by hydrogenating liquid vegetable oils, for example soyabean oil, and sunflowerseed oil, but is preferably prepared by hydrogenation of the liquid, i.e. oleine fraction from fractionating palm, shea or sal fat at 0 to 20°C, preferably in hexane, acetone or 2-nitropropane and subsequently hydrogenating the liquid fraction to a slip melting point of 40 to 50°C, preferably approximately 45°C and particularly reducing the Iodine Value, preferably using a selective nickel catalyst, from 65—70 to a value after refining, bleaching and neutralising of 40—50, and NMR values at 20°C and 30°C of 60—85 and 40—55. The amount of hardstock in the confectionery fats of the invention is preferably 1 to 10%, particularly about 5%. More particularly, a blend is preferred comprising approximately equal parts of mid- and oleine fractions of palm or shea fat and approximately 5% of palm or shea fats or fractions thereof which have been hardened to a slip melting point of approximately 45°C.

Lauric fat fractions and/or hydrogenated lauric fats may be present in the compositions of the invention. The compositions of the invention preferably exhibit a slip melting point of 30—38°C, N values of 25—50 at 20°C and at most 5 at 35°C. They are particularly useful as biscuit creams but may be used for most purposes for which confectionery fats are required.

### Examples

Blends were prepared of a mid-fraction of palm oil in the proportions 50:50 and 60:40 with fluid fractions (slip melting points 23.5 and 21°C and Iodine Values 66 and 77)) of palm oil and shea oil, obtained from solutions of these oils in acetone. Each of the four blends obtained was tested for aeration alone and in filling creams made according to the following recipes:—

| Ingredient | Wafer Filling | Prince Fourre Filling |
| --- | --- | --- |
| Fat | 600 | 500 |
| Icing sugar | 700 | 600 |
| Dextrose | 100 | 200 |
| Corn Starch | 40 | — |
| Skim milk powder | 40 | — |
| Salt | 4 | 1.5 |

2

**0 072 212**

The tests were carried out by aerating the fat or filling at 20°C using a Hobart Kitchen-Aid set at stage 2 for 40 minutes and measuring the specific volume of the aerated material after the lipase of $2\frac{1}{2}$, 20 and 40 minutes.

The tests were repeated on compositions according to the invention, made from each of the fat blends with 5% of additive fat of slip melting point 45°C, obtained by hardening palm oil or a fluid fraction obtained by fractionating shea oil from acetone. The compositions were melted and passed through a scraped-surface heat exchanger operated at −5°C and 6—700 r.p.m., leaving it at a temperature of 18—23°C.

From the accompanying Table 1 it is evident that the additive hard fats generally improve the specific volume of the filling creams, although the effect is more marked with the shea additive. Further particulars of the fat additive appear in Table 2.

TABLE 1
Specific Volume cc/gm

| Blend | Additive | Fat | | | Wafer | | Filling Prince Fourre | |
|---|---|---|---|---|---|---|---|---|
| | | $2\frac{1}{2}$ | 20 | 40 | $2\frac{1}{2}$ | 20 | $2\frac{1}{2}$ | 20 mins |
| 50:50 | Nil | 1.3 | 2.49 | 2.3 | 1.19 | 1.38 | 1.19 | 1.28 |
| | P | 1.3 | 3.29 | 4.0 | 1.31 | 1.61 | 1.16 | 1.30 |
| | S | 1.31 | 3.54 | 4.18 | 1.26 | 1.53 | 1.24 | 1.48 |
| 60:40 | Nil | 1.31 | 2.3 | 2.20 | 1.21 | 1.37 | 1.19 | 1.28 |
| | P | 1.31 | 2.23 | 2.14 | 1.21 | 1.35 | 1.21 | 1.31 |
| | S | 1.23 | 3.29 | 3.83 | 1.31 | 1.67 | 1.23 | 1.58 |

TABLE 2

| Code | Fat | IV | Slip Melting Point °C | 20°C | 30°C |
|---|---|---|---|---|---|
| P | Palm | 45 | 45 | 73—80 | 47—53 |
| S | Shea | 50 | 45 | 64 | 43 |

**Claims**

1. A confectionery fat comprising a blend of vegetable fats at least one-third of which consists of fractionated palm oil, the confectionery fat having a slip melting point of at most 40°C and dilatations at 20°C of at least 300 and at 30°C of at most 750 and characterised by the presence in the blend of hardstock fat comprising at most 10% of a hydrogenated vegetable fat having a slip melting point of at least 40°C for improving aeration.

2. Fat according to Claim 1 wherein the fractionated palm oil comprises a mid-fraction having an Iodine Value from 33 to 36 and dilatations at 20°C of at least 1400 and at 35°C of at most 150.

3. Fat according to Claim 1 or 2 wherein the fractionated palm oil comprises an oleine fraction of palm oil obtained by removing an upper-melting fraction therefrom.

4. Fat according to any of the preceding claims wherein additional vegetable butters are included which constitute with the fractionated palm fat present a blend suitable for use as a cocoabutter substitute.

5. Fat according to Claim 4 wherein the additional vegetable butters comprise shea, aceituno, kokum or illipe fats or fractions thereof.

6. Fat according to any of the preceding claims wherein the hardstock fat has an Iodine Value of 40 to 50 and solids content values of 60 to 85 at 20°C and 40 to 55 at 30°C.

7. Fat according to any of the preceding claims wherein the hardstock comprises an oleine fraction of palm, shea or sal fat fractionated at 0 to 20°C and 40 to 55 at 30°C.

8. Fat according to Claim 1 comprising a blend of approximately equal parts of mid- and oleine-fractions of palm or shea fat and approximately 5% of palm or shea fat or fractions thereof, hardened to a slip melting point of approximately 45°C.

3

# 0 072 212

9. Aerated filling for biscuits and confectionery comprising a fat as claimed in any of the preceding claims.

10. Method of preparing a confectionery fat as claimed in Claim 1 comprising blending a mixture of the fats containing at least one-third by weight of the fractionated palm fat and up to 10% of a hydrogenated vegetable fat having a slip melting point of 40 to 50°C and working and chilling the melted mixture through a scraped surface heat exchanger, from a temperature at which it is completely liquid to a temperature from 5 to 20°C.

**Patentansprüche**

1. Konditoreiwarenfett, das eine Mischung von Pflanzenfetten enthält, wovon mindestens ein Drittel aus fraktioniertem Palmöl besteht, wobei das Konditoreiwarenfett einen Steigschmelzpunkt von höchstens 40°C und bei 20°C Dilatationen von mindestens 300 und bei 30°C von höchstens 750 aufweist, dadurch gekennzeichnet, daß ein hochschmelzendes Fett in der Mischung vorliegt, das zur Verbesserung der Lockerung höchstens 10% eines hydrierten Pflanzenfetts eines Steigschmelzpunktes von mindestens 40°C enthält.

2. Fett nach Anspruch 1, wobei das fraktionierte Palmöl eine Mittelfraktion einer Jodzahl von 33 bis 36 und mit Dilatationen bei 20°C von mindestens 1.400 und bei 35°C von höchstens 150 enthält.

3. Fett nach Anspruch 1 oder 2, wobei das fraktionierte Palmöl eine Oleinfraktion des Palmöls enthält, die daraus durch Entfernen einer höherschmelzenden Fraktion erhalten wurde.

4. Fett nach irgendeinem der vorhergehenden Ansprüche, worin zusätzliche Pflanzenbutter eingeschlossen ist, die zusammen mit dem vorliegenden fraktionierten Palmfett eine Mischung bildet, die als Kakaobuttersubstitut geeignet ist.

5. Fett nach Anspruch 4, worin die zusätzliche Pflanzenbutter Shea-, Aceituno-, Kokum- oder Illipefette oder Fraktionen davon enthält.

6. Fett nach irgendeinem der vorhergehenden Ansprüche, worin das hochschmelzende Fett eine Jodzahl von 40 bis 50 und Feststoffgehaltswerte von 60 bis 85 bei 20°C und 40 bis 55 bei 30°C aufweist.

7. Fett nach irgendeinem der vorhergehenden Ansprüche, worin die hochschmelzende Komponente eine Oleinfraktion von Palm-, Shea- oder Salfett, fraktioniert bei 0 bis 20°C und von 40 bis 55 bei 30°C, enthält.

8. Fett nach Anspruch 1 mit einem Gehalt an einer Mischung von näherungsweise gleichen Teilen von mittleren und Oleinfraktionen vom Palm- oder Sheafett und von näherungsweise 5% Palm- oder Sheafett oder Fraktionen davon, gehärtet bis auf einen Steigschmelzpunkt von näherungsweise 45°C.

9. Belüftete Füllung für Biskuits und Konditoreiwaren, die ein in irgendeinem der vorhergehenden Ansprüche beanspruchtes Fett enthält.

10. Verfahren zur Herstellung eines Konditoreiwarenfettes, beansprucht in Anspruch 1, das das Mischen einer Mischung von Fetten, die mindestens zu einem Drittel des Gewichts das fraktionierte Palmfett und bis zu 10% ein hydriertes Pflanzenfett eines Steigschmelzpunktes von 40 bis 50°C enthalten, und das Bearbeiten und Abkühlen der geschmolzenen Mischung durch einen Dünnschichtwärmeaustauscher von einer Temperatur, bei der sie vollständig flüssig ist, auf eine Temperatur von 5 bis 20°C umfaßt.

**Revendications**

1. Graisse pour confisierie-pâtisserie comprenant un mélange de graisses végétales dont au moins un tiers consiste en huile de palme fractionnée, cette graisse ayant un point de glissement par fusion au plus de 40°C et des dilatations à 20°C d'au moins 300 et à 30°C de 750 au plus, et caractérisée par la présence dans le mélange de produit solide constitué au plus de 10% d'une graisse végétale hydrogénée ayant un point de glissement par fusion d'au moins 40°C pour améliorer l'aération.

2. Graisse selon la Revendication 1, dans laquelle l'huile de palme fractionnée comprend une fraction moyenne ayant un Indice d'Iode compris entre 33 et 36 et des dilatations à 20°C d'au moins 1400 et à 35°C de 150 au plus.

3. Graisse selon la Revendication 1 ou 2, dans laquelle l'huile de palme fractionnée comprend une fraction oléine d'huile de palme obtenue en y éliminant une fraction à point de fusion supérieur.

4. Graisse selon l'une quelconque des Revendications précédentes, dans laquelle des beurres végétaux additionnels sont inclus qui constituent avec la graisse de palme fractionnée présente un mélange convenable pour l'utilisation en tant que substitut du beurre de cacao.

5. Graisse selon la Revendication 4, dans laquelle les beurres végétaux additionnels comprennent des graisses de bassia, d'aceituno, de kokum ou d'illipé ou des fractions de ceux-ci.

6. Graisse selon l'une quelconque des Revendications précédentes, dans laquelle la graisse solide a un Indice d'Iode compris entre 40 et 50 et des teneurs en solides de 60 à 85 à 20°C et de 40 à 55 à 30°C.

7. Graisse selon l'une quelconque des Revendications précédentes, dans laquelle la partie solide comprend une fraction oléine de graisse de palme, de bassia ou de sal fractionnée entre 0 et 20°C et 40 à 50 à 30°C.

8. Graisse selon la Revendication 1, comprenant un mélange en proportions approximativement égales des fractions oléine et moyenne de graisse de palme ou de bassia et approximativement 5% de graisse de palme ou de bassia ou leurs fractions, durcies de façon à obtenir un point de fusion d'approximativement 45°C.

9. Garnissage aéré pour biscuits et confiserie comprenant une graisse selon l'une quelconque des Revendications précédentes.

10. Procédé de préparation d'une graisse pour confisierie-pâtisserie selon la Revendication 1, comprenant le mélangeage d'un mélange de graisses contenant au moins un tiers en poids de graisse de palme fractionnée et jusqu'à 10% de graisse végétale hydrogénée ayant un point de glissement par fusion compris entre 40 et 50°C, puis le travail et le refoidissement du mélange fondu sur la surface raclée d'un échangeur de chaleur, dupuis la température à laquelle il est complètement liquide jusqu'à une température de 5 à 20°C.